# EUROPEAN PATENT APPLICATION

(11) **EP 2 500 712 A2**
(43) Date of publication of application: **19.09.2012**
(21) Application number: 12001592.0
(22) Date of filing: 08.03.2012
(51) Int. Cl.: G01N 21/35

(54) **Gas concentration measuring apparatus**

(30) Priority: 14.03.2011 JP 2011055592
(71) Applicant: HORIBA, Ltd., Minami-ku Kyoto-shi Kyoto 601-8510 (JP)
(72) Inventor: Iwata, Norikazu, Kyoto-shi Kyoto 601-8510 (JP); Kagawa, Akifumi, Kyoto-shi Kyoto 601-8510 (JP)
(74) Representative: Müller - Hoffmann & Partner

(57) **Abstract**

Provided is a gas concentration measuring apparatus (1) capable of detecting an intrusion of a liquid moisture or a large quantity of a gaseous moisture in the apparatus by using an existing component. The apparatus (1) includes a light source, a sample cell disposed on an optical path of the light source and into which a sample gas is introduced, an interference component detector (5) for receiving a light of the light source which has been transmitted through the sample cell (3), and detecting an intensity of a light in a wavelength range corresponding to an absorption spectrum of an interference component, a main detector (4) for receiving the light of the light source which has been transmitted through the sample cell, and detecting an intensity of a light in a wavelength range corresponding to an absorption spectrum of a measuring target component, a calculating portion (6) for calculating a concentration of the measuring target component based on the intensity detected by the main detector (4) and the intensity detected by the interference component detector (5), an intrusion detecting portion (7) for detecting the likelihood that a performance deteriorating substance may have intruded based on the intensity detected by the interference component detector (5), and an intrusion preventing portion (51) for inhibiting a further intrusion of the performance deteriorating substance when it is detected that there is high possibility that the performance deteriorating substance may have intruded.

## Description

### BACKGROUND OF THE INVENTION

### 1. Field of the Invention

The present invention relates to a gas concentration measuring apparatus and more particularly to a gas concentration measuring apparatus capable of detecting an intrusion of a performance deteriorating substance (for example, a liquid moisture or a large quantity of a gaseous moisture) into the apparatus by using an existing component, thereby preventing a deterioration in a performance of the apparatus or a failure thereof.

### 2. Description of the Related Art

Conventionally, an apparatus for measuring various gas concentrations (a gas concentration measuring apparatus) has been developed. The gas concentration measuring apparatus serves to measure a concentration of a component such as SO₂, CO, CO₂, NO_{X} or the like in a sample gas and to display a result of the measurement on a liquid crystal display, for example.

The gas concentration measuring apparatus may be installed and used in various places by a user. For example, in some cases in which a component of a gas discharged from a funnel is to be checked, a sample gas inlet of the gas concentration measuring apparatus is connected to the funnel. In many cases, a gas containing a large quantity of moisture is discharged from the funnel. In such cases, not only a liquid moisture but also a gaseous moisture intrude the gas concentration measuring apparatus through the sample gas inlet. In the case in which the liquid moisture intrudes the gas concentration measuring apparatus, there is a possibility that the moisture might intrude a gas analyzing unit via an electronic cooling unit. When the liquid moisture intrudes the gas analyzing unit, the moisture might stick, as a waterdrop, to an internal wall surface of a sample cell, resulting in deterioration in a gas analyzing performance, particularly, in a gas analyzing unit using an infrared absorbing method. In the case in which SO₂ is dissolved into the moisture sticking to the internal wall surface of the sample cell, a sulfuric acid might be generated to corrode the internal wall surface of the sample cell. When the waterdrop sticking to the internal wall surface of the sample cell is dried, a pattern such as a water deposit is left on the internal wall surface so that a gas analyzing performance might be deteriorated.

In the case in which a large quantity of a high-concentration gaseous moisture intrudes the gas concentration measuring apparatus, the electronic cooling unit cannot sufficiently eliminate the moisture, so that the moisture liquefied in the gas concentration measuring apparatus might intrude the gas analyzing unit. The liquefied moisture might deteriorate the gas analyzing performance as described above.

Japanese Laid-Open Patent Publication No. 2001-221428 discloses an in-gas moisture monitoring apparatus including a gas meter capable of opening/closing a gas piping for supplying a fuel gas to a car, a sensor portion for detecting moisture in a gas in the gas piping, a determination means for determining whether a value detected by the sensor portion is an abnormal value or not, and a stop signal output means for outputting a gas stop signal to the gas meter to block the supply of the gas if the determination means determines that the detected value is an abnormal value.

According to the apparatus of Japanese Laid-Open Patent Publication No. 2001-221428, it is possible to stop the supply of the gas to the car when the quantity of the moisture in the gas reaches an abnormal value level. In the apparatus, however, it is necessary to separately provide the sensor portion, which is a problem in that cost is increased. In the apparatus, moreover, it is not taken into account how the moisture may adversely influence the sensor portion itself, and thus a countermeasure cannot be taken.

### SUMMARY OF THE INVENTION

In consideration of the actual circumstances, it is an object of the present invention to provide a gas concentration measuring apparatus capable of detecting an intrusion of a performance deteriorating substance (that is, a substance causing a deterioration in a performance of the gas concentration measuring apparatus, for example, a liquid moisture or a large quantity of a gaseous moisture) into the gas concentration measuring apparatus by using an existing component, thereby preventing the deterioration in the performance of the apparatus or a failure thereof.

In order to attain the object, the present invention employs the following means.

A first aspect of the present invention is directed to a gas concentration measuring apparatus for measuring a concentration of a measuring target component in a sample gas, the apparatus including:
a light source unit having a light source;
a sample cell unit disposed on an optical path of the light source and into which a sample gas is introduced;
an interference component detector for receiving a light of the light source which has been transmitted through the sample cell unit, and detecting an intensity of a light in a wavelength range corresponding to an absorption spectrum of an interference component that interferes with the measuring target component;
a main detector for receiving the light of the light source which has been transmitted through the sample cell unit, and detecting an intensity of a light in a wavelength range corresponding to an absorption spectrum of the measuring target component;
a calculating portion for calculating a concentration of the measuring target component based on the intensity detected by the main detector and the intensity detected by the interference component detector;
an intrusion detecting portion for detecting the likelihood that a performance deteriorating substance that deteriorates a performance of the gas concentration measuring apparatus may have intruded the gas concentration measuring apparatus based on the intensity detected by the interference component detector; and
an intrusion preventing portion having at least one of an intrusion inhibiting portion for inhibiting a further intrusion of the performance deteriorating substance if it is detected that there is high possibility that the performance deteriorating substance may have intruded the gas concentration measuring apparatus and an informing portion for informing a user of the intrusion of the performance deteriorating substance if it is detected that there is high possibility.

According to the first aspect of the present invention, the intrusion of the performance deteriorating substance to deteriorate the performance of the gas concentration measuring apparatus is detected based on the intensity detected by the interference component detector. If the intrusion of the performance deteriorating substance is detected, at least one of the following two processes is performed. One process is inhibiting the further intrusion of the performance deteriorating substance. The other process is informing the intrusion of the performance deteriorating substance. Therefore, in the case in which the performance deteriorating substance (for example, a liquid moisture, a large quantity of a high-concentration gaseous moisture or a large quantity of a high-concentration gaseous ammonia) intrudes the gas concentration measuring apparatus, it is possible to detect the intrusion by using an existing component (the interference component detector or the like), thereby preventing a deterioration in a performance of the apparatus or a failure thereof.

A second aspect of the present invention is directed to the gas concentration measuring apparatus according to the first aspect of the present invention, wherein the performance deteriorating substance is a moisture.

According to the second aspect of the present invention, in the case in which the moisture to be the performance deteriorating substance intrudes the gas concentration measuring apparatus, it is possible to detect the intrusion by using an existing component (the interference component detector or the like), thereby preventing a deterioration in a performance of the apparatus or a failure thereof.

A third aspect of the present invention is directed to the gas concentration measuring apparatus according to the first or second aspect of the present invention, wherein the intrusion inhibiting portion blocks a path through which the sample gas reaches the sample cell unit, thereby inhibiting the intrusion of the performance deteriorating substance.

According to the third aspect of the present invention, in the case in which the performance deteriorating substance intrudes the gas concentration measuring apparatus, the path through which the sample gas reaches the sample cell unit is blocked so as to easily inhibit the intrusion of the performance deteriorating substance, thereby preventing a deterioration in a performance of the apparatus or a failure thereof.

A fourth aspect of the present invention is directed to the gas concentration measuring apparatus according to any one of the first to third aspects of the present invention, wherein the intrusion inhibiting portion stops a pump that introduces the sample gas into the sample cell unit, thereby inhibiting the intrusion of the performance deteriorating substance.

According to the fourth aspect of the present invention, in the case in which the performance deteriorating substance intrudes the gas concentration measuring apparatus, the pump is stopped so as to easily inhibit the intrusion of the performance deteriorating substance, thereby preventing a deterioration in a performance of the apparatus or a failure thereof.

According to the present invention, in the case in which the performance deteriorating substance (for example, a liquid moisture) intrudes the gas concentration measuring apparatus, it is possible to detect the intrusion by using an existing component, thereby preventing a deterioration in a performance of the apparatus or a failure thereof.

### BRIEF DESCRIPTION OF THE DRAWINGS

Fig. 1 is a diagram showing a structure of a gas concentration measuring apparatus according to an embodiment to the present invention;
Fig. 2 is a diagram showing a CO-SO₂ analyzing unit in the gas concentration measuring apparatus illustrated in Fig. 1;
Fig. 3 is a view showing an example of an outer appearance of the gas concentration measuring apparatus illustrated in Fig. 1; and
Fig. 4 is a flow chart showing an example of an operation of the gas concentration measuring apparatus illustrated in Fig. 1.

### DETAILED DESCRIPTION OF THE PREFERRED EMBODIMENTS

### (A Preferred Embodiment)

A gas concentration measuring apparatus according to an embodiment of the present invention will be described with reference to the drawings.

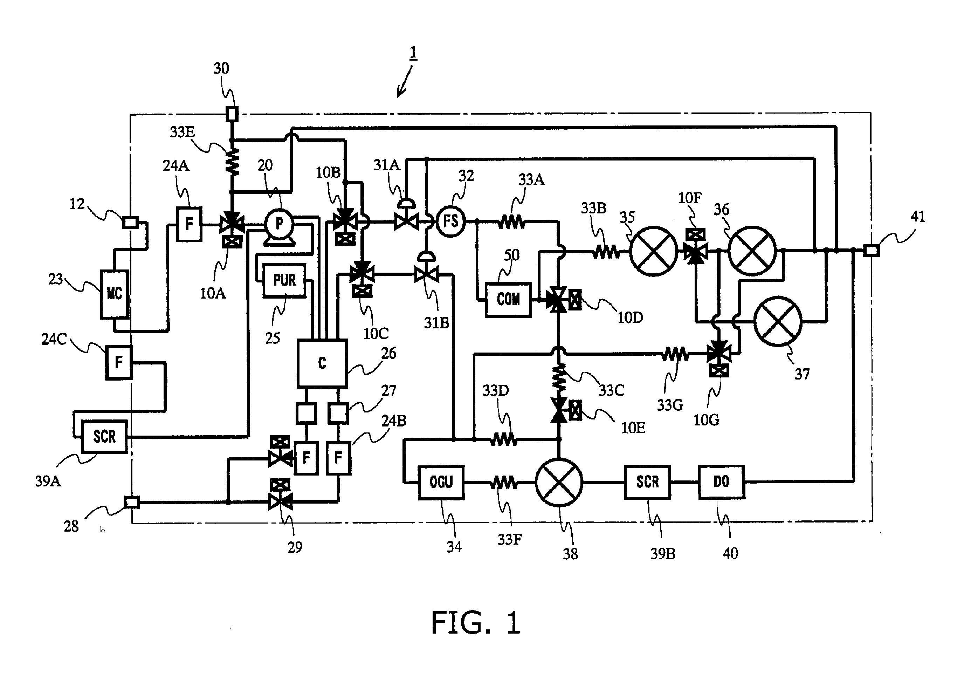

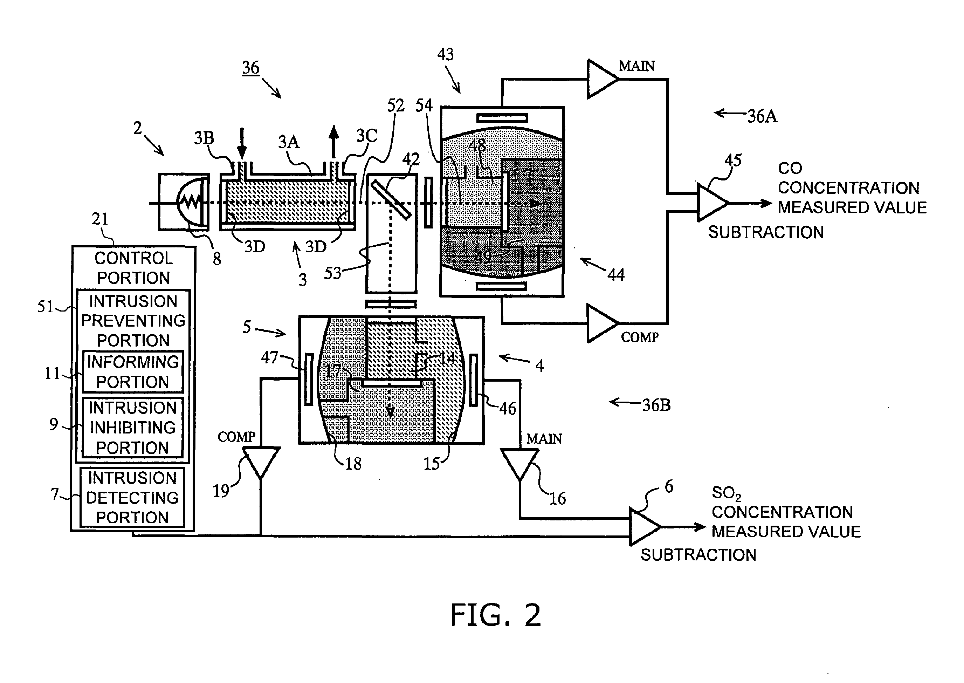

Fig. 1 is a diagram showing a structure of the gas concentration measuring apparatus according to the embodiment of the present invention. Fig. 2 is a diagram showing a CO-SO₂ analyzing unit in the gas concentration measuring apparatus illustrated in Fig. 1.

A gas concentration measuring apparatus 1 according to the present embodiment serves to measure concentrations of measuring target components in a sample gas. The sample gas is not particularly restricted as long as it contains the measuring target component. The measuring target component can be selected variously and examples thereof include SO₂, CO, CO₂, and NO_{X}. In the example shown in Fig. 1, SO₂, CO, CO₂, NO_{X} and O₂ are set to be the measuring targets. It is preferable that the measuring target components include a component with which a gaseous moisture interferes, as an interference component. If such a component is set as the measuring target component, it is possible to detect, by using an existing component, an intrusion of a liquid moisture into the gas concentration measuring apparatus 1 or an intrusion of a large quantity of a high-concentration gaseous moisture into the apparatus 1. Such a measuring target component includes SO₂ (sulfur dioxide). Therefore, the gas concentration measuring apparatus 1 may set only SO₂ as the measuring target component. The sample gas is introduced from a sample gas inlet 12 provided in the gas concentration measuring apparatus 1, the concentration thereof is measured by the gas concentration measuring apparatus 1, and the gas is processed in a predetermined way, and then is discharged from an outlet 41.

As shown in Fig. 1, the gas concentration measuring apparatus 1 includes the sample gas inlet 12, a mist catcher 23, filters 24A to 24C, direction switching valves (three-direction electromagnetic valves) 10A to 10G, a pump 20, a zero calibration gas refining unit 25, an electronic cooling unit 26, a drain pot 27, a drain outlet 28, a two-direction electromagnetic valve 29, a calibration gas inlet 30, pressure regulating units 31A and 31B, a flow sensor 32, capillaries 33A to 33G, an ozone generator 34, a converter 50, a CO₂ analyzing unit 35, a CO-SO₂ analyzing unit 36, an O₂ analyzing unit 37, an NO_{X} analyzing unit 38, scrubbers 39A and 39B, an ozone degradation unit 40, and a discharging port 41.

In the gas concentration measuring apparatus 1, first of all, the pump 20 is driven so that a sample gas is extracted from the sample gas inlet 12. The sample gas thus extracted is processed to have a mist eliminated in the mist catcher 23. The sample gas from which the mist has been eliminated is transmitted through the filter 24A for removing foreign substance and is then cooled to a predetermined temperature (for example, 5°C) by the electronic cooling unit 26. The moisture resulted from condensation due to the cooling is discharged from the drain outlet 28 via the drain pot 27, the filter 24B, and the two-direction electromagnetic valve 29. The sample gas from which the moisture has been eliminated (dehumidification) to some degree in the electronic cooling unit 26 is introduced into the CO₂ analyzing unit 35, the CO-SO₂ analyzing unit 36, the O₂ analyzing unit 37, and the NO_{X} analyzing unit 38.

The CO₂ analyzing unit 35 serves to measure a CO₂ concentration in the sample gas by using an infrared absorbing method. The CO-SO₂ analyzing unit 36 serves to measure a CO concentration and a SO₂ concentration in the sample gas by using the infrared absorbing method. The O₂ analyzing unit 37 serves to measure an O₂ concentration in the sample gas by using a zirconia method. The NO_{X} analyzing unit 38 serves to measure an NO_{X} concentration in the sample gas through a chemoluminescent method, by using ozone generated by the ozone generator 34. In the sample gas introduced into the NO_{X} analyzing unit 38, NO₂ is converted into NO by the converter 50 in advance. The sample gas subjected to the measurement in each of the analyzing units is post-treated by the scrubber 39B, the ozone degradation unit 40, and the like if necessary, and is then discharged from the discharging port 41. Moreover, when measured values obtained by each of the analyzing units are to be calibrated, the direction switching valve 10A is switched to carry out switching from a state in which the sample gas is introduced through the sample gas inlet 12 to a state in which a calibration gas is introduced from the calibration gas inlet 30 and the calibration gas is thus introduced into each of the analyzing units. When the calibration gas is to be introduced, a calibration gas filling cylinder is connected to the calibration gas inlet 30. If the calibration gas inlet 30 is released to the air when necessary, outside air can be introduced from the calibration gas inlet 30.

An object of the present invention is to detect, by using an existing component, an intrusion of a liquid moisture into the gas concentration measuring apparatus 1 or a large quantity of a high-concentration gaseous moisture into the apparatus 1 and to take a necessary countermeasure, thereby preventing a deterioration in a performance or a failure in the apparatus 1. Means for achieving the object is mainly provided in an SO₂ analyzing unit 36B of the CO-SO₂ analyzing unit 36 (see Fig. 2).

The reason is as follows. In the case in which a concentration of SO₂ is measured using the infrared absorbing method, a concentration of agaseous moisture (H₂O) interferes with that of SO₂. In order to eliminate the influence of the interference, the intensity of a light in a wavelength range corresponding to an absorption spectrum of the gaseous moisture (H₂O) is measured in the SO₂ analyzing unit. If a value based on the intensity of the light in the wavelength range corresponding to the absorption spectrum of the gaseous moisture in the sample gas (for example, a level of an electric signal outputted from an interference component detector 5 or an amplified value of the electric signal) is equal to or smaller than a threshold in the SO₂ analyzing unit, it is expected that the liquid moisture has intruded the gas concentration measuring apparatus 1 or a large quantity of the high-concentration gaseous moisture has intruded the apparatus 1. In the present embodiment, therefore, the possibility of the liquid moisture having intruded the gas concentration measuring apparatus 1 or of the high-concentration gaseous moisture having intruded the apparatus 1 is detected based on the intensity of the light in the wavelength range corresponding to the absorption spectrum of the moisture detected in the SO₂ analyzing unit 36B.

Description will be given by focusing on the CO-SO₂ analyzing unit 36 provided with the means for achieving the object of the present invention.

As shown in Fig. 2, the CO-SO₂ analyzing unit 36 includes a CO analyzing unit 36A and the SO₂ analyzing unit 36B. The SO₂ analyzing unit 36B includes, as main components, a light source unit 2, a sample cell unit 3, a main detector 4, the interference component detector 5, a calculating portion 6, an intrusion detecting portion 7, an intrusion inhibiting portion 9, and an informing portion 11. An intrusion preventing portion 51 is constituted by the intrusion inhibiting portion 9 and the informing portion 11.

The light source unit 2 is provided with a light source 8. The type of the light source 8 is an infrared light source. The SO₂ analyzing unit 36B is an analyzing unit that uses a non-dispersion type infrared analyzing method.

The sample cell unit 3 is disposed on an optical path of the light source 8, and the sample gas is introduced into the sample cell unit 3. The sample cell unit 3 includes a cylindrical body portion 3A, an inlet 3B for introducing the sample gas into the body portion 3A, and an outlet 3C for discharging the sample gas from the body portion 3A. Moreover, an infrared transmitting window 3D is provided on both ends of the body portion 3A. Although a material of the sample cell unit 3 is not particularly restricted, a cylindrical member formed of stainless, aluminum, vinyl chloride or the like can be used as the body portion 3A, for example. Furthermore, an internal surface of the body portion 3A may be plated with a metal such as gold. A light 52 of the light source 8 which has been transmitted through the sample cell unit 3 (as shown in a broken line of Fig. 2) is separated into two directions by means of a beam splitter 42. A light 53 obtained after the separation (as shown in a broken line of Fig. 2) is incident onto the main detector 4 and the interference component detector 5 in the SO₂ analyzing unit 36B. The other light 54 obtained after the separation (as shown in a broken line of Fig. 2) is incident onto a main detector 43 and an interference component detector 44 in the CO analyzing unit 36A.

The interference component detector 5 serves to receive the light of the light source 8 which has been transmitted through the sample cell unit 3, and detect an intensity of a light in a wavelength range corresponding to the absorption spectrum of an interference component that interferes with the measuring target component. More specifically, the interference component detector 5 receives the light of the light source 8 which has been transmitted through the sample cell unit 3, and outputs a signal having a level corresponding to the intensity of the light in the wavelength range corresponding to the absorption spectrum of the interference component. In the example shown in Fig. 2, the interference component is a gaseous moisture (H₂O). In the example shown in Fig. 2, the interference component detector 5 is set to be a pneumatic type detector using a capacitor microphone (a movable film 18).

The main detector 4 serves to receive the light of the light source 8 which has been transmitted through the sample cell unit 3, and detect an intensity of a light in a wavelength range corresponding to the absorption spectrum of a measuring target component. The intensity of the light detected by the main detector 4 includes an influence from an interference component. More specifically, the main detector 4 receives the light of the light source 8 which has been transmitted through the sample cell unit 3, and outputs a signal having a level corresponding to the intensity of the light in the wavelength range corresponding to the absorption spectrum of the measuring target component. In the example shown in Fig. 2, the main detector 4 is set to be a pneumatic type detector using the capacitor microphone (a movable film 15).

The calculating portion 6 serves to detect a concentration of the measuring target component based on the intensity detected by the main detector 4 and the intensity detected by the interference component detector 5. More specifically, the calculating portion 6 subtracts an amplified signal output from the interference component detector 5 from an amplified signal output from the main detector 4, thereby detecting the concentration of the measuring target component (outputting a signal having a level corresponding to the concentration of the measuring target component).

Description will be given to a gas concentration measuring principle in the CO-SO₂ analyzing unit 36.

It is known that molecules constituted by different atoms absorb infrared rays in specific wavelength ranges respectively and the molecules absorb the amount of infrared rays according to concentrations at a given constant pressure. The measuring apparatus 1 using the non-dispersion type infrared analyzing method can measure a concentration of a component in a gas based on such a property of the gas. In the CO-SO₂ analyzing unit 36 shown in Fig. 2, the sample gas and a reference gas (a so-called zero calibration gas) are alternately introduced at a certain flow into the sample cell unit 3 by a switching operation of the direction switching valves 10F and 10G (see Fig. 1) which carry out the switching continuously at a certain cycle. The quantity of the absorption of the infrared rays during the introduction of the sample gas is different from that during the introduction of the reference gas.

The infrared rays irradiated from the light source 8 pass through the sample cell unit 3, and then enter the main detector 4 in which the same gas as the measuring target component (SO₂) is filled in advance, and the interference component detector 5 in which a gas having the same absorbing characteristic as that of the interference component (the gaseous moisture (H₂O)) is filled in advance. In Fig. 2, gas filling regions of the main detector 4 and the interference component detector 5 are shown in hatching or different concentration of gray. When the reference gas is introduced into the sample cell unit 3, energy of the infrared rays is not absorbed by the reference gas in the sample cell unit 3. Accordingly, the infrared rays transmitted through the sample cell unit 3 reach the main detector 4 and the interference component detector 5 without absorption of the energy. On the other hand, when the sample gas is introduced into the sample cell unit 3, energy of the infrared rays is absorbed by the measuring target component in the sample gas. Accordingly, the infrared rays having the energy absorbed by the measuring target component in the transmission through the sample cell unit 3 reach the main detector 4 and the interference component detector 5. In other words, during the introduction of the sample gas, the quantity of the infrared rays which are incident onto the main detector 4 and the interference component detector 5 is smaller by an amount corresponding to the energy absorbed by the measuring target component in the sample gas, when compared with that during the introduction of the reference gas.

The interference component detector 5 has a light receiving chamber 17. The light receiving chamber 17 is provided with the movable film 18 which is to be displaced upon receipt of a variation in a pressure of a filling gas in the light receiving chamber 17. If the absorbed energy is different between during the introduction of the reference gas into the sample cell unit 3 and during the introduction of the sample gas into the same, the quantity of the infrared rays reaching an inner part of the light receiving chamber 17 differs. Consequently, degrees of an expansion of the gas in the light receiving chamber 17 are different between the introduction of the reference gas and that of the sample gas. Thus, a difference in pressure is resulted in the light receiving chamber 17 corresponding to a difference between the degrees of the expansion. Depending on the difference in the pressure, a displacement is applied to the movable film 18. The displacement is outputted as an electric signal (which corresponds to "an intensity of a light in a wavelength range corresponding to an absorption spectrum of an interference component that interferes with a measuring target component" in claims) through a displacement sensor 47, and the electric signal is amplified by an amplifier 19.

The main detector 4 has a light receiving chamber 14. The light receiving chamber 14 is provided with the movable film 15 which is to be displaced upon receipt of a variation in a pressure of a filling gas in the light receiving chamber 14. If the absorbed energy is different between during the introduction of the reference gas into the sample cell unit 3 and during the introduction of the sample gas into the same, the quantity of the infrared rays reaching an inner part of the light receiving chamber 14 differs. Consequently, degrees of an expansion of the gas in the light receiving chamber 14 are different between the introduction of the reference gas and that of the sample gas. Thus, a difference in pressure is resulted in the light receiving chamber 14 corresponding to a difference between the degrees of the expansion. Depending on the difference in the pressure, a displacement is applied to the movable film 15. The displacement is outputted as an electric signal (which corresponds to "an intensity of a light in a wavelength range corresponding to an absorption spectrum of a measuring target component" in claims) through a displacement sensor 46, and the electric signal is amplified by an amplifier 16.

The calculating portion 6 carries out a subtraction processing for subtracting the amplified signal output from the interference component detector 5 from the amplified signal output from the main detector 4. With the subtraction processing, a concentration signal is generated for a measuring target component (SO₂) from which the influence from the interference component has been removed. The signal generated by the calculating portion 6 is input to a display portion which is not shown. The display portion displays a concentration of the measuring target component from which the influence from the interference component has been removed.

The intrusion detecting portion 7 detects the possibility of a performance deteriorating substance, which causes a deterioration in a performance of the gas concentration measuring apparatus 1, having intruded the gas concentration measuring apparatus 1 based on a level of the signal sent from the interference component detector 5. More specifically, the intrusion detecting portion 7 determines whether the level of the signal sent from the interference component detector 5 is equal to or lower than a first threshold or not, for example. If the level is equal to or smaller than the first threshold, the intrusion detecting portion 7 determines that there is possibility that the performance deteriorating substance, which causes the deterioration in the performance of the gas concentration measuring apparatus 1, may have intruded the gas concentration measuring apparatus 1. The intrusion detecting portion 7 is implemented as a functional portion by having a microcomputer provided in a control portion 21 execute a control program which is prestored in a ROM (Read Only Memory) or the like provided in the control portion 21.

Although the performance deteriorating substance is not particularly restricted, it is a liquid moisture or a large quantity of a high-concentration gaseous moisture in the example shown in Fig. 2. In some cases in which the liquid moisture or the large quantity of the high-concentration gaseous moisture intrudes the inner part of the gas concentration measuring apparatus 1 through the sample gas inlet 12 or the like, the moisture may not be sufficiently removed through the electronic cooling unit 26 and may intrude the sample cell unit 3.

In the present embodiment, therefore, it is determined whether the level of the signal sent from the interference component detector 5 is equal to or smaller than the first threshold or not as described above. If it is determined that the level is equal to or lower than the first threshold, it is determined that there is the possibility that the liquid moisture or the large quantity of the high-concentration gaseous moisture may have intruded the gas concentration measuring apparatus 1 through the sample gas inlet 12 or the like.

If it is determined that the level is equal to or smaller than the first threshold, a following measure is taken by the intrusion preventing portion 51 for preventing further intrusion of the performance deteriorating substance. For example, the further intrusion of the performance deteriorating substance may be inhibited by the intrusion inhibiting portion 9. As will be described below, moreover, a user may be informed of the intrusion of the performance deteriorating substance by the informing portion 11.

It is also possible to inhibit the intrusion through the intrusion inhibiting portion 9 while informing the user of the intrusion through the informing portion 11, or to carry out the two of them at different timings from each other. If they are carried out at the same time, the further intrusion of the performance deteriorating substance is inhibited while the user is informed of the intrusion of the performance deteriorating substance.

In the case in which they are carried out at different timings from each other, the first threshold may be separately set to be a value for a low emergency level and a value for a high emergency level, for example. The value for the low emergency level is set to be greater than the value for the high emergency level. In the case in which the level of the signal sent from the interference component detector 5 is higher than the value for the high emergency level and is equal to or lower than the value for the low emergency level, the user is informed of the intrusion through the informing portion 11. In the case in which the level is equal to or smaller than the value for the high emergency level, the user is informed of the intrusion through the informing portion 11 while an operation for inhibiting the intrusion of the performance deteriorating substance is carried out by the intrusion inhibiting portion 9.

The intrusion inhibiting portion 9 serves to inhibit a further intrusion of the performance deteriorating substance when it is determined through the intrusion detecting portion 7 that the performance deteriorating substance has intruded the gas concentration measuring apparatus 1. The intrusion inhibiting portion 9 is implemented as a functional portion by having the microcomputer provided in the control portion 21 execute the control program which is prestored in the ROM (Read Only Memory) or the like provided in the control portion 21. If the level of the signal sent from the interference component detector 5 (either a non-amplified signal or an amplified signal) is equal to or smaller than the first threshold, the intrusion detecting portion 7 determines that the performance deteriorating substance has intruded the gas concentration measuring apparatus 1 and outputs an intrusion detection signal to the intrusion inhibiting portion 9.

Specific functions of the intrusion inhibiting portion 9 are not particularly restricted. For example, however, the intrusion inhibiting portion 9 can inhibit the intrusion of the performance deteriorating substance by blocking a path through which the sample gas reaches the sample cell unit 3. More specifically, the intrusion inhibiting portion 9 can have a function for issuing a stop instruction to the pump 20 which introduces the sample gas to the sample cell unit 3, thereby stopping the pump 20, for example, (hereinafter referred to as a pump stopping function). In the case in which the pump stopping function is provided, it is sufficient as long as the pump 20 is stopped in accordance with the stop instruction of the intrusion inhibiting portion 9 when the level of the signal sent from the interference component detector 5 (either the non-amplified signal or the amplified signal) is equal to or lower than the first threshold.

Moreover, the intrusion inhibiting portion 9 may have a function for issuing a switching instruction to the direction switching valve 10A which selectively introduces either the sample gas or the outside air to the sample cell unit 3, thereby changing the direction switching valve 10A to the outside air introducing side (hereinafter referred to as a valve switching function). Examples of the direction switching valve 10A include a three-direction electromagnetic valve. In the case in which the valve switching function is provided, the direction switching valve 10A is switched to the outside air introducing side in accordance with the switching instruction of the intrusion inhibiting portion 9 when the level of the signal sent from the interference component detector 5 is equal to or lower than the first threshold. Consequently, the intrusion of a liquid moisture or a large quantity of a high-concentration gaseous moisture from the sample gas inlet 12 is inhibited and that the outside air is introduced from the calibration gas inlet 30. The calibration gas inlet 30 usually serves as a portion for introducing a calibration gas for calibrating a measured value of each analyzer, but may be released to the air, thereby enabling the introduction of the outside air as described above.

The intrusion inhibiting portion 9 may have only one of the two functions (the pump stopping function and the valve switching function) or may have both of the two functions. In the case in which the intrusion inhibiting portion 9 has both of the two functions, the following structure can be employed, for example.

When the intrusion inhibiting portion 9 receives an intrusion detection signal from the intrusion detecting portion 7, the valve switching function is first activated so as to introduce the outside air for a while. If the signal sent from the interference component detector 5 is increased and reaches a predetermined value which is greater than the first threshold after a predetermined time has passed, the intrusion detecting portion 7 determines that a liquid moisture or a large quantity of a high-concentration gaseous moisture did not intrude the gas concentration measuring apparatus 1 (that is, a correction of the determination of the intrusion which was previously made), and outputs an intrusion non-detection signal to the intrusion inhibiting portion 9. When receiving the intrusion non-detection signal, the intrusion inhibiting portion 9 cancels the intrusion inhibiting operation and issues a switching instruction to the direction switching valve 10A, thereby switching the direction switching valve 10A to the sample gas introducing side (a return to the introduction of the sample gas).

On the other hand, if the signal sent from the interference component detector 5 is not increased to reach a predetermined value which is greater than the first threshold after the predetermined time has passed, the intrusion detecting portion 7 determines again that the liquid moisture or the large quantity of the high-concentration gaseous moisture may have intruded the gas concentration measuring apparatus 1, and outputs an intrusion detection signal to the intrusion inhibiting portion 9. When receiving the intrusion detection signal, the intrusion inhibiting portion 9 activates the pump stopping function at this time so as to stop the pump 20.

By carrying out such a control in two stages, it may be verified whether a previous determination of the intrusion is proper or not. If the previous determination of the intrusion was an error, the operation of the pump 20 does not need to be stopped. In other words, even if the intrusion detection signal has been input, the pump 20 is not stopped immediately, but it is first verified whether the detection of the intrusion is correct or not. The pump 20 is then stopped based on a result of the verification. As the cause for the erroneous detection of the intrusion, there may be the case in which a gas having almost the same infrared absorption characteristic as that of the moisture is contained in the sample gas (a gas other than SO₂) and has a high concentration, for example.

The informing portion 11 serves to inform a user of the intrusion of the performance deteriorating substance when it is determined in the intrusion detecting portion 7 that the performance deteriorating substance has intruded the gas concentration measuring apparatus 1. The informing portion 11 is implemented as a functional portion by having the microcomputer provided in the control portion 21 execute the control program which is prestored in the ROM (Read Only Memory) or the like provided in the control portion 21. If the level of the signal sent from the interference component detector 5 (either the non-amplified signal or the amplified signal) is equal to or lower than the first threshold, the intrusion detecting portion 7 determines that the performance deteriorating substance has intruded the gas concentration measuring apparatus 1 and outputs the intrusion detection signal to the informing portion 11.

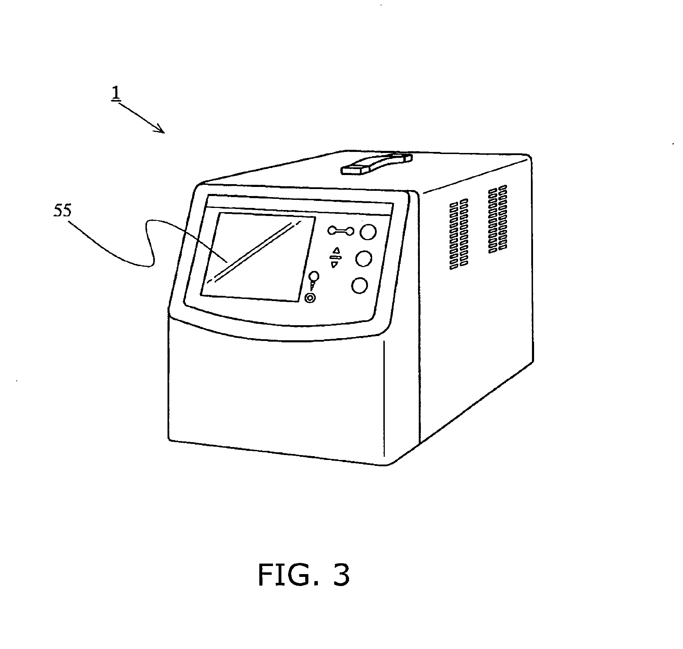

Although specific functions of the informing portion 11 are not particularly restricted, the following function may be included, for example. Fig. 3 is a view showing an example of an outer appearance of the gas concentration measuring apparatus 1.

The informing portion 11 may issue an intrusion informing instruction to the display portion and thus may have a message indicative of an intrusion displayed on a display screen 55 of the display portion or may turn ON an alarm lamp (not shown) of the display portion, for example. Moreover, the informing portion 11 may output the intrusion informing instruction to a voice output portion and thus may have an alarm sound or a vocal message indicative of an intrusion outputted from a speaker (not shown) of the voice output portion.

As described above, the intrusion inhibiting operation of the intrusion inhibiting portion 9 may be carried out simultaneously with the operation for informing the user of the intrusion through the informing portion 11, or these operations may be performed at different timings from each other. If they are carried out at the same time, the user can be informed of a possibility of the intrusion of the performance deteriorating substance while the introduction of the sample gas is stopped by the operation of the intrusion inhibiting portion 9. Consequently, the user can recognize that the introduction of the sample gas is stopped due to the intrusion of the performance deteriorating substance, and not because of a failure of the apparatus. In this case, for example, a message such as "the pump is stopped because the performance deteriorating substance may have intruded the apparatus" or the like may be displayed on the display screen 55 or the same vocal message may be output from the speaker.

In the case in which the intrusion inhibiting operation and the informing operation are carried out at different timings from each other, moreover, different intrusion preventing measures can be employed depending on the emergency level, which may be either low or high, as described above.

Next, description will be given to the CO analyzing unit 36A provided together with the SO₂ analyzing unit 36B.

The CO analyzing unit 36A includes, as main structure, the light source unit 2, the sample cell unit 3, the main detector 43, the interference component detector 44, and a calculating portion 45. However, the CO analyzing unit 36A is different from the SO₂ analyzing unit 36B in that the intrusion detecting portion, the intrusion inhibiting portion and the informing portion are not provided. The light source unit 2 and the sample cell unit 3 are shared with the SO₂ analyzing unit 36B. The main detector 43 and the interference component detector 44 are different from the main detector 4 and the interference component detector 5 in the SO₂ analyzing unit 36B in that CO is filled into a light receiving chamber 48 included in the main detector 43 in advance and CO₂ is filled into a light receiving chamber 49 included in the interference component detector 44 in advance, and the rest are the same as those in the case of the SO₂ analyzing unit 36B. Also in the CO analyzing unit 36A, a concentration of CO from which the influence of CO₂, which is an interference component, is eliminated is measured in accordance with the same principle as that in the case of the SO₂ analyzing unit 36B. Unlike the moisture, however, the interference component CO₂ does not directly influence the gas concentration measuring apparatus 1 adversely. For this reason, the component does not particularly need to be detected as a performance deteriorating substance.

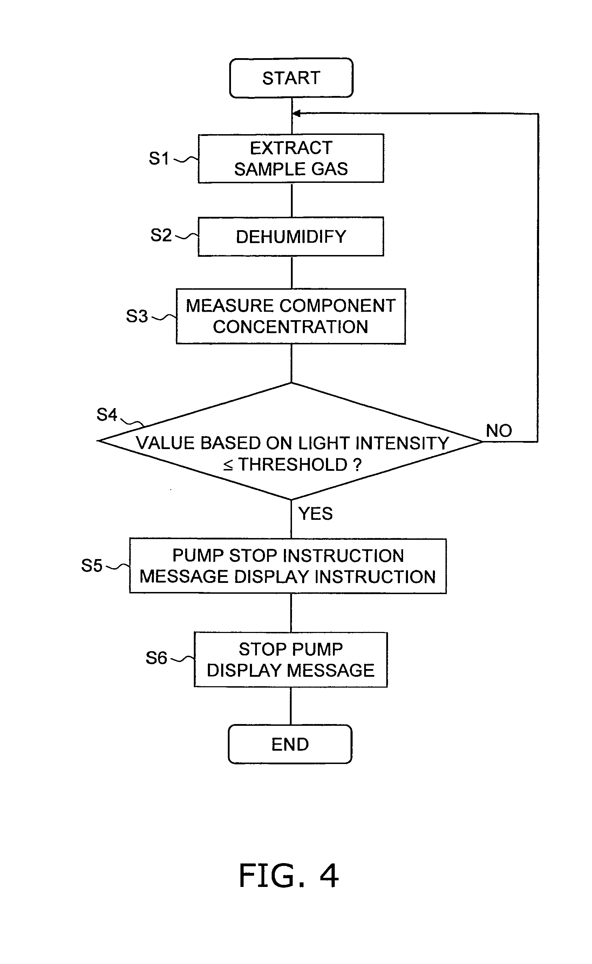

Next, an operation for detecting the intrusion of the performance deteriorating substance (the liquid moisture or the large quantity of the high-concentration gaseous moisture) in the gas concentration measuring apparatus 1 and an operation for inhibiting the intrusion of the performance deteriorating substance in the same will be described with reference to a flow chart shown in Fig. 4. Description will be based on, as an example, the case in which the intrusion inhibiting operation of the intrusion inhibiting portion 9 and the operation for informing a user of the intrusion through the informing portion 11 are carried out at the same time.

As shown in Fig. 4, first of all, the pump 20 is driven and the sample gas is then extracted from the sample gas inlet 12 (Step S1). Subsequently, the sample gas thus extracted is cooled to a predetermined temperature (for example, 5°C) by means of the electronic cooling unit 26, and the condensed moisture is discharged from the drain outlet 28 (Step S2). Thereafter, the sample gas from which the moisture has been removed to some degree in the electronic cooling unit 26 is introduced into the CO₂ analyzing unit 35, the CO-SO₂ analyzing unit 36, the O₂ analyzing unit 37, and the NO_{X} analyzing unit 38, and a concentration measurement for each measuring target component is carried out (Step S3).

Next, the SO₂ analyzing unit 36B of the CO - SO₂ analyzing unit 36 detects an intensity of a light in a wavelength range corresponding to the absorption spectrum of a gaseous moisture in the sample gas and determines whether a value based on the intensity of the light (for example, a level of a signal sent from the interference component detector 5) is equal to or lower than a first threshold (Step S4). If it is determined that the value based on the intensity of the light is equal to or smaller than the first threshold at the Step S4 (YES in the Step S4), the SO₂ analyzing unit 36B determines that a performance deteriorating substance may have intruded the gas concentration measuring apparatus 1, and outputs a stop instruction signal to the pump 20, and further has, in the display portion, a display instruction signal for displaying a message such as "the pump is stopped because a large quantity of moisture may have intruded the apparatus" or the like (Step S5). Next, the pump 20 having received the stop instruction signal stops the operation and the display portion having received the stop instruction signal displays the message (Step S6). On the other hand, if it is determined that the value based on the intensity of the light is greater than the first threshold at the Step S4 (NO in the Step S4), the processing returns to the Step S1.

The foregoing is an example of the operation for detecting the intrusion of the performance deteriorating substance into the gas concentration measuring device 1 and the operation for inhibiting the intrusion of the performance deteriorating substance into the same.

As described above, the gas concentration measuring apparatus 1 detects the possibility of the performance deteriorating substance (for example, a liquid moisture) that deteriorates the performance of the gas concentration measuring apparatus 1 having intruded based on the level of the signal sent from the interference component detector 5, and inhibits the further intrusion of the performance deteriorating substance based on the result of the detection. Accordingly, in the case in which the performance deteriorating substance intrudes the gas concentration measuring apparatus 1, it is possible to detect the intrusion by using an existing component (the interference component detector 5 or the like) and to inhibit the further intrusion of the performance deteriorating substance based on the result of the detection, thereby reliably preventing a deterioration in a performance of the gas concentration measuring apparatus 1 or a failure thereof. According to the gas concentration measuring apparatus 1, if the possibility of the intrusion of the performance deteriorating substance having occurred is detected, the user is informed of the possibility of the intrusion. Therefore, the user can recognize that the stoppage of the pump 20 is not caused by any failure. If the user is informed of the possibility of the intrusion of the performance deteriorating material, the user himself (herself) can also stop the pump 20 manually.

Although the intrusion detecting portion 7 detects the possibility of the performance deteriorating material having intruded the gas concentration measuring apparatus 1 when the level of the signal sent from the interference component detector 5 is equal to or lower than the first threshold in the above embodiment, the following may be instead employed. For example, the intrusion detecting portion 7 may determine that the performance deteriorating substance has intruded the gas concentration measuring apparatus 1 when a decreasing rate of the level of the signal sent from the interference component detector 5 is equal to or smaller than a second threshold. Also in this case, the same effects as those in the above embodiment can be produced. Moreover, the intrusion detecting portion 7 may determine that the performance deteriorating substance has intruded the gas concentration measuring apparatus 1 when the concentration of the interference component which is calculated based on the level of the signal sent from the interference component detector 5 is equal to or higher than a third threshold.

In the case in which the concentration of SO₂ is measured, moreover, a concentration of gaseous ammonium (NH₃) also interferes with the measurement of the concentration of SO₂. In order to eliminate the influence of the interference, it is also acceptable to measure the concentration of the gaseous ammonium (NH₃) in the interference component detector. When the concentration is increased, the ammonium acts as a performance deteriorating substance for the gas concentration measuring apparatus 1. For this reason, it is also acceptable to detect the concentration of the ammonium, thereby taking the same intrusion preventing measures as those for the moisture.

Moreover, although the infrared light source is used as the light source in the above embodiment, the present invention can also be applied to the case in which another light source such as an ultraviolet light source is used as the light source.

The present invention can be utilized for a gas concentration measuring apparatus capable of detecting an intrusion of a performance deteriorating substance (for example, a liquid moisture or a large quantity of a gaseous moisture) into the gas concentration measuring apparatus, thereby preventing a deterioration in a performance of the apparatus or a failure thereof or the like.

## Claims

1. A gas concentration measuring apparatus (1) for measuring a concentration of a measuring target component in a sample gas, the apparatus (1) comprising:
a light source unit (2) having a light source;
a sample cell unit (3) disposed on an optical path of the light source and into which a sample gas is introduced;
an interference component detector (5) for receiving a light of the light source which has been transmitted through the sample cell unit (3), and detecting an intensity of a light in a wavelength range corresponding to an absorption spectrum of an interference component that interferes with the measuring target component;
a main detector (4) for receiving the light of the light source which has been transmitted through the sample cell unit (3), and detecting an intensity of a light in a wavelength range corresponding to an absorption spectrum of the measuring target component;
a calculating portion (6) for calculating a concentration of the measuring target component based on the intensity detected by the main detector (4) and the intensity detected by the interference component detector (5);
an intrusion detecting portion (7) for detecting the possibility of a performance deteriorating substance that deteriorates a performance of the gas concentration measuring apparatus (1) having intruded the gas concentration measuring apparatus (1) based on the intensity detected by the interference component detector (5); and
an intrusion preventing portion (51) having at least one of an intrusion inhibiting portion (9) for inhibiting a further intrusion of the performance deteriorating substance when the intrusion detecting portion (7) detects the possibility of the performance deteriorating substance having intruded the gas concentration measuring apparatus (1) and an informing portion (11) for informing a user of the intrusion of the performance deteriorating substance when the intrusion detecting portion (7) detects the possibility.

2. The gas concentration measuring apparatus (1) according to claim 1,
wherein the performance deteriorating substance is a moisture.

3. The gas concentration measuring apparatus (1) according to claim 1 or 2, wherein the intrusion inhibiting portion (9) blocks a path through which the sample gas reaches the sample cell unit (3), thereby inhibiting the intrusion of the performance deteriorating substance.

4. The gas concentration measuring apparatus (1) according to any one of claims 1 to 3, wherein the intrusion inhibiting portion (9) stops a pump (20) that introduces the sample gas into the sample cell unit (3), thereby inhibiting the intrusion of the performance deteriorating substance.
